# EUROPEAN PATENT APPLICATION

(11) **EP 1 790 921 A1**
(43) Date of publication of application: **30.05.2007**
(21) Application number: 06256115.4
(22) Date of filing: 29.11.2006
(51) Int. Cl.: F25B 27/00, B60H 1/32, B60P 3/20

(54) **Transport refrigeration system**

(30) Priority: 29.11.2005 GB 0524312
(71) Applicant: Cummins Generator Technologies, Stamford, Lincolnshire PE9 2NB (GB)
(72) Inventor: Al-Tayie, Jawad, Stamford, Lincolnshire PE9 4NQ (GB); Al-Khayat, Nazar, Rutland, Leicestershire LE15 6NF (GB); Seliga, Robert, c/o Cummins Generator Technologies, Stamford, Lincolnshire PE9 2NB (GB); Grey, Richard, c/o Cummins Generator Technologies, Stamford, Lincolnshire PE9 2NB (GB)
(74) Representative: Williams, Michael Ian

(57) **Abstract**

A transportation refrigeration system is disclosed, the system comprising an electrically driven refrigeration unit (50) and a generator set (10). The refrigeration unit has a mixed electrical load including a motor driven compressor (12). The generator set comprises a variable speed engine (52), a generator (54) driven by the engine to produce an ac output for powering the refrigeration unit, and a control unit (68) for varying the speed of the engine in dependence on a change in state of the compressor. This can allow the engine to be run efficiently. The control unit may be arranged to anticipate a change in state of the compressor, and to change an operating parameter of the generator set before the change in state of the compressor.

## Description

The present invention relates to a transportation refrigeration system, and in particular to a transportation refrigeration system having an electrically driven refrigeration unit for refrigerating a load space, and a generator set for supplying electrical power to the refrigeration unit. The present invention has particular, but not exclusive, application in temperature controlled road vehicles.

Transportation refrigeration systems are well known, and allow for example a delivery vehicle to transport goods in a temperature controlled environment. For example, road transport refrigerated trailers are operated by supermarkets and other retailers for the delivery of chilled and frozen goods to their stores. The refrigeration units for these trailers are configured either as truck drive or direct drive, or are driven by a generator set.

In a truck drive configuration the refrigeration unit is driven by the vehicle's engine. This can be achieved either by mechanically coupling the vehicle's engine to the refrigeration compressor, or by using the vehicle's engine to generate electricity, and powering the compressor from the generated electricity. This configuration has the disadvantage that it requires the vehicle's engine to be running in order to power the refrigeration unit, even when the vehicle is stationary. Since the vehicle's engine is much larger than that needed to drive the refrigeration unit, this is inefficient and may generate unacceptable levels of particulate emissions while loading and unloading goods.

In a direct drive configuration the refrigeration unit has a separate diesel engine mechanically connected to the refrigeration compressor. This configuration has the advantage that the refrigeration unit is driven separately from the vehicle's engine, which can allow the refrigeration unit to run even when the vehicle's engine is switched off. This configuration may also provide the advantage that a different type of fuel, such as a lower-taxed fuel, may be used to drive the refrigeration unit.

However this configuration requires a complex pulley arrangement for standby electric drive, and requires an open shaft compressor which may leak.

In a generator set powered configuration, the refrigeration compressor is electrically powered by a generator set consisting of an engine and an alternator. This allows the refrigeration unit to be driven separately from the vehicle's engine, while avoiding the disadvantages of the direct drive configuration.

In known generator set powered configurations, the compressor is driven directly by the ac output of the alternator. The speed of the engine which drives the alternator is chosen to fulfil two requirements. Firstly the power output of the alternator must be sufficient to start the compressor and to support additional loads such as evaporator fans and a condenser, and secondly the ac supply must have a voltage to frequency ratio suitable for powering the compressor. Typically the engine is run at 1500 or 1800 rpm in order to produce an ac supply of 50 or 60 Hz.

In the known generator set powered configuration, the generator set is optimised to run most efficiently while it is powering the compressor. This is because the compressor is usually the component which draws the largest power. However, once the load space is at its desired temperature, the compressor is typically controlled in a hysteresis loop to maintain the temperature, with the compressor being turned on and off as necessary. This may lead to inefficient operation while the compressor is switched off. Furthermore, the sudden increase in load when the compressor is turned on may place stress on the generator set.

According to a first aspect of the invention there is provided a transportation refrigeration system comprising an electrically driven refrigeration unit having a mixed electrical load including a motor driven compressor, and a generator set, the generator set comprising:
a variable speed engine;
a generator driven by the engine to produce an ac output for powering the refrigeration unit; and
a control unit for varying the speed of the engine in dependence on a change in state of the compressor.

By varying the speed of the engine in dependence on a change in state of the compressor, the engine may be run at optimum speeds for different states of the compressor. The power produced by the engine, and hence the amount of fuel consumed, varies in dependence on the speed of the engine, and thus the present invention may allow the system to operate more efficiently, in particular during periods when the load demand is low.

In any refrigeration unit the compressor is likely to be the component which draws the largest power. In known transportation refrigeration systems the generator set is optimised to run most efficiently at maximum load, which is generally while the compressor is switched on. However this may lead to inefficient operation while the compressor is switched off. An advantage of the present invention is that the generator may be optimised for average load rather than maximum load, which may improve the overall fuel efficiency.

The engine may be directly coupled to the generator for example by means of a shaft, or it may be coupled by means of a belt or gearing or any other means. Where a belt, gearing or other transmission means is provided, this may have a fixed ratio or a variable ratio. For example, the ratio may be variable in dependence on the state of the compressor.

The control unit may be, for example, arranged to increase the speed of the engine when the compressor is switched on, and/or to decrease the speed of the engine when the compressor is switched off.

The control unit may detect a change in the state of the compressor in a number of different ways. For example, a change in the state of the compressor may result in a change in the output of the generator, due to an increase or decrease in the current which is drawn by the compressor. Thus the control unit may be arranged to monitor an output of the generator and to vary the speed of the engine in dependence thereon. For example, the control unit may monitor the output power of the generator, or the output current, or the output voltage. This may be done by monitoring the voltage and/or current of the ac output. In some cases the generator may produce an intermediate dc output, in which case the control means may monitor the voltage and/or current of the intermediate dc output. The system may comprise one or more sensors for sensing any of these parameters.

When the compressor switches on, an increased load is presented to the generator, which may cause an increased current to be drawn. The generator may not initially be able to meet the required power demand, which may cause the output voltage to decrease. Thus the control unit may be arranged to increase the engine speed in response to an increased output power, and/or an increased output current, and/or a decreased output voltage.

In another embodiment, the control unit is arranged to receive a signal from the refrigeration unit and to vary the speed of the engine in dependence thereon. For example, the signal may be a signal which is used by the refrigeration unit to control the compressor, such as a signal which turns the compressor on or off. Alternatively, the control unit may receive some other signal which indicates that the compressor will turn on or is likely to turn on. For example, in some refrigeration units a fan such as an evaporator fan is switched off before the compressor is switched on. Thus the signal may be a signal which is used by the refrigeration unit to control a fan, such as an evaporator fan, a radiator fan, a condenser fan, or a compressor fan.

Typically a refrigeration unit includes (or is connected to) a temperature sensor which senses the temperature inside the load space, and the refrigeration unit is arranged to maintain the sensed temperature within a desired range. The output of the temperature sensor may indicate an imminent change in state of the compressor. For example, if the output of the temperature sensor falls below a predetermined level then the compressor may be switched on. Thus the signal may be an output of a temperature sensor.

In some circumstances it may be appropriate to use two or more signals to vary the speed of the engine. For example, a particular sequence of signal may indicate the imminent switching on of the compressor, and such a sequence may be detected by the control unit and used to control the speed of the engine. Thus the control unit may be arranged to vary the speed of the engine in response to a predetermined sequence of signals.

Control of the engine speed based on a signal received from the refrigeration unit may be instead of or in addition to control of the engine speed based on an output of the generator.

In order to allow the engine time to increase its speed to that necessary to provide the power demanded by the compressor, it may be desirable to increase the speed of the engine before the compressor is switched on. Thus the speed of the engine may be changed before a change in state of the compressor. This may be done by monitoring a signal which may anticipate a change in state of the compressor, and varying the speed of the engine in dependence on the monitored signal.

According to a second aspect of the invention there is provided a transportation refrigeration system comprising an electrically driven refrigeration unit having a motor driven compressor, and a generator set, the generator set comprising:
a variable speed engine;
a generator driven by the engine to produce an ac output for powering the refrigeration unit; and
a control unit for controlling the speed of the engine in dependence on the power requirements of the refrigeration unit,
wherein the control unit is arranged to anticipate a change in state of the compressor, and to change an operating parameter of the generator set before the change in state of the compressor.

By anticipating a change in state of the compressor, and changing an operating parameter of the generator set before the change in state of the compressor, the impact on the generator set of a change in state of the compressor can be reduced.

The control unit may be arranged to vary one or more of the speed of the engine, the generator output voltage and the generator output frequency before the change in state of the compressor.

For example, when the compressor is turned on, it may be necessary for the control unit to increase the speed of the engine to meet the increased power demand. In order to allow the engine time to increase its speed, the control unit may be arranged to increase the speed of the engine when the compressor is to be switched on.

The control unit may anticipate a change in state of the compressor in a number of different ways. For example, the control unit may be arranged to receive a signal from the refrigeration unit indicating that the compressor is to be switched on.

In one example, the signal may be a signal which is used by the refrigeration unit to control the compressor, such as a signal which turns the compressor on or off. Alternatively, the control unit may receive some other signal which indicates that the compressor will turn on or is likely to turn on. For example, the signal may be a signal which is used by the refrigeration unit to control a fan, such as an evaporator fan, a radiator fan, a condenser fan, or a compressor fan, or the signal may be an output of a temperature sensor.

In some circumstances it may be appropriate to use two or more signals to anticipate a change in state of the compressor. For example, a particular sequence of signal may indicate the imminent switching on of the compressor, and such a sequence may be detected by the control unit. Thus the control unit may be arranged to change an operating parameter of the generator set in response to a predetermined sequence of signals.

In another embodiment, a control signal which is fed to the compressor is delayed so that a change in state of the compressor is delayed. Thus the system may further comprise delay means for delaying a signal for controlling the compressor, and the compressor may receive the delayed signal. By delaying the signal for controlling the compressor, the control unit can change an operating parameter of the generator set before the change in state of the compressor. The delay may be, for example, between one and five seconds, or some other value.

In order to reduce the impact on the system of the compressor switching on, it may be desirable to increase the power drawn by the compressor in a controlled manner when it is switched on. Thus the control unit may be arranged to control the power drawn by the compressor. For example, the control unit may be arranged to control the power drawn by the compressor when the compressor is switched on. This may be done, for example, by controlling the voltage and/or the frequency of the ac output which is supplied by the generator. For example, the power drawn by the compressor may depend on the frequency and voltage of the ac supply, since the compressor may comprise a pump. Thus, the control unit may be arranged such that the frequency of the ac output is lower than its steady state value when the compressor is first switched on. Alternatively or in addition, the control unit may be arranged such that the voltage of the ac output is lower than its steady state value when the compressor is first switched on.

The control unit may detect the switching on of the compressor in a number of different ways. For example, the control unit may be arranged to monitor an output of the generator and to control the voltage and/or the frequency of the ac output in dependence thereon. The output may be, for example, the output power, or the output current, or the output voltage. This may be done by monitoring the voltage and/or current of the ac output, and/or the voltage and/or current of an intermediate dc output, for example by using one or more sensors. In particular, the control unit may be arranged to reduce the voltage and/or the frequency of the ac output in response to an increased output power, and/or an increased output current, and/or a decreased output voltage.

Alternatively or in addition the control unit may be arranged to control the voltage and/or the frequency of the ac output in dependence on a signal generated by the refrigeration unit indicating a change in state of the compressor. This arrangement may provide the advantage that the control unit can react before or as the compressor switches on, rather than in response to the compressor switching on. Thus this arrangement may allow the power drawn by the compressor to be increased in a smooth and controlled manner.

For example, the control unit may be arranged to receive a signal which is used by the refrigeration unit to control the compressor, and to control the voltage and/or the frequency of the ac output in dependence thereon. Alternatively, the control unit may receive some other signal which indicates that the compressor will turn on or is likely to turn on. For example, the control unit may be arranged to receive a signal which is used by the refrigeration unit to control a fan, and to control the voltage and/or the frequency of the ac output in dependence thereon. The fan may be, for example, an evaporator fan, a radiator fan, a condenser fan or a compressor fan. As a further example the control unit may be arranged to receive an output of a temperature sensor and to control the voltage and/or the frequency of the ac output in dependence thereon. The control unit may be arranged to control the voltage and/or the frequency of the ac output in response to a predetermined sequence of signals.

Where a delay is provided before the compressor is switched on, or where a signal is available which anticipates a switching on of the compressor, the voltage and/or the frequency of the ac output may be changed before a change in state of the compressor. This may allow a smooth switching on of the compressor.

Rather than (or in addition to) controlling the generator output in order to control the power drawn by the compressor, the control unit may be arranged to output a signal to the refrigeration unit for controlling the compressor. In one example, the control unit may output a signal to the refrigeration unit for switching the compressor on once the speed of the engine has reached a predetermined level. In another example the control unit may output a signal to the refrigeration unit for controlling the power drawn by the compressor.

In some circumstances, rather than turning the compressor on and off in order to maintain the temperature of the load space at a desired level, the compressor may be operated continuously at a variable level in order to maintain the required temperature. In one embodiment, this is achieved by controlling the frequency and/voltage of the ac output so as to operate the compressor at the required level. Thus the control unit may be arranged to vary the frequency and/or voltage of the ac output in order to operate the compressor at a level which maintains the temperature of a load space within a desired range.

The control unit may be arranged to monitor an output of the generator and to vary the speed of the engine in dependence thereon. For example, the control unit may monitor the output power of the generator, or the output current, or the output voltage. This may be done by monitoring the voltage and/or current of the ac output. In some cases the generator may produce an intermediate dc output, in which case the control means may monitor the voltage and/or current of the intermediate dc output. The system may comprise one or more sensors for sensing any of these parameters.

The control unit may be arranged to increase the engine speed in response to an increased output power, and/or an increased output current, and/or a decreased output voltage. This may soften the impact of the load on the engine. Control of the engine speed may be based on a signal received from the refrigeration unit and/or based on an output of the generator.

In some transportation refrigeration systems two or more compartments may be provided with separate refrigeration requirements. In such circumstances two or more compressors may be provided, and the control unit may be arranged to change an operating parameter of the generator set in dependence on the state of the compressors. For example, the control system may be arranged to control the engine such that the engine operates at a higher speed when two or more compressors are switched on than when one compressor is switched on. Different compressors may have different power requirements, and thus the speed of the engine may depend on which compressor is switched on.

Where a plurality of compressors is provided, the control unit may be arranged to control the voltage and/or the frequency of the ac output in dependence on the state of the compressors. This can allow each compressor to be turned on in a controlled manner.

The generator set may be required to power other parts of the refrigeration unit, such as a fan, even when the compressor is not switched on. Thus the generator set may be required to produce an ac output within a certain frequency and voltage range at all times. To achieve this, the generator may comprise an alternator for producing an ac output, an ac to dc converter for converting the ac output of the alternator to an intermediate dc output, and a dc to ac converter for converting the intermediate dc output to an ac output for driving the refrigeration unit. This arrangement can allow the generator set to produce an ac output having a substantially fixed frequency and voltage for different engine speeds. Preferably the generator comprises a dc to dc converter for regulating the voltage of the intermediate dc output.

While the voltage and/or frequency of the ac output may be reduced in order to switch the compressor on in a controlled manner, any reduction in the voltage or frequency should preferably be by an amount which can be tolerated by other components in the system.

An important feature of the present invention is that a signal from the refrigeration unit is fed to a variable speed generator set's control unit, for use in controlling the generator set. This important feature may be provided independently, and thus, according to third aspect of the invention there is provided a transportation refrigeration system comprising an electrically driven refrigeration unit having a compressor, and a generator set for providing electrical power for the refrigeration unit, the generator set comprising:
a variable speed engine;
a generator driven by the engine to produce an ac output; and
a control unit for controlling the generator in dependence on a signal from the refrigeration unit.

The control unit may be arranged to control one or more of the engine speed, the output voltage and the output frequency in dependence on the signal from the refrigeration unit.

Features of any one aspect of the invention may be applied to any of the other aspects of the invention.

The transportation refrigeration system of the present invention may be for any type of transportation, such as by ship, air, rail or road. The present invention is particularly suitable for vehicle mounted refrigeration systems, and thus the system may be a vehicle refrigeration system. The present invention extends to a refrigerated vehicle comprising a refrigeration system in any of the forms described above. Alternatively the present invention may be used with a refrigerated container for transport by ship or rail.

According to a method aspect of the invention there is provided a method of controlling a transportation refrigeration system, the system comprising an electrically driven refrigeration unit comprising a mixed electrical load including a motor driven compressor, and a generator set comprising a variable speed engine and a generator for providing electrical power for the refrigeration unit, the method comprising varying the speed of the engine in dependence on a change in state of the compressor.

According to another aspect of the present invention there is provided a method of controlling a transportation refrigeration system, the system comprising an electrically driven refrigeration unit having a motor driven compressor, and a generator set comprising a variable speed engine, a generator for providing electrical power for the refrigeration unit and a control unit for controlling the speed of the engine in dependence on the power requirements of the refrigeration unit, the method comprising anticipating a change in state of the compressor, and changing an operating parameter of the generator set before the change in state of the compressor.

Any of the apparatus features may be provided as method features and *vice versa*.

Preferred features of the present invention will now be described, purely by way of example, with reference to the accompanying drawings, in which:
Figure 1 shows parts of a vehicle refrigeration system for use with the present invention;
Figure 2 shows parts of a vehicle refrigeration system in accordance with a first embodiment of the invention;
Figure 3 shows a graph of the electrical power consumed by the refrigeration unit 10 over time;
Figure 4 shows parts of a vehicle refrigeration system in a second embodiment of the invention;
Figure 5 shows parts of a vehicle refrigeration system in a third embodiment of the invention;
Figure 6 shows parts of a vehicle refrigeration system in a fourth embodiment of the invention;
Figure 7 is a graph of current, voltage and frequency over time in the arrangement of Figure 6;
Figure 8 shows parts of a vehicle refrigeration system in a fifth embodiment of the invention; and
Figure 9 shows parts of a vehicle refrigeration system in a sixth embodiment of the invention.

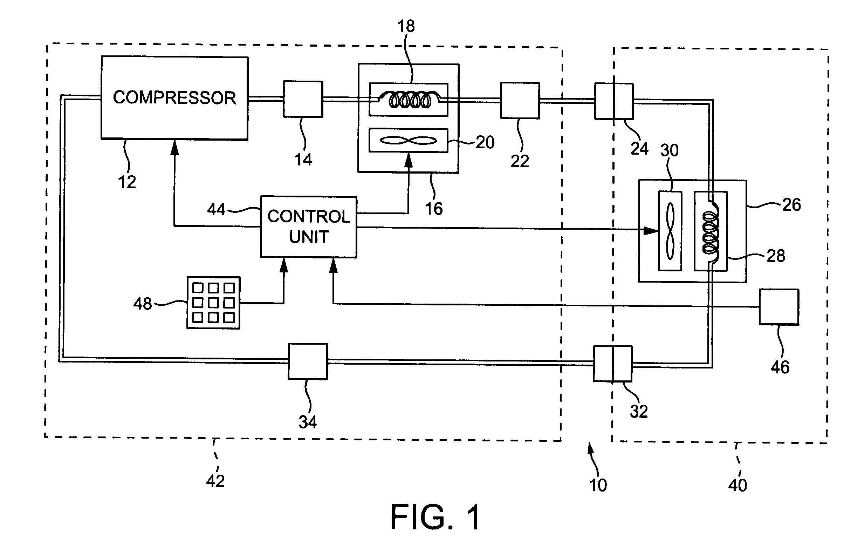

Figure 1 shows parts of a vehicle refrigeration system for use with the present invention. Referring to Figure 1, the refrigeration system 10 comprises motor driven compressor 12, valve 14, condenser unit 16 comprising condenser coil 18 and fan 20, expansion valve 22, connector 24, evaporator unit 26 comprising evaporator coil 28 and fan 30, connector 32 and valve 34. The evaporator unit 26 is located within load space 40, while the remaining parts of the refrigeration system are located in a separate refrigeration unit 42. The connectors 24 and 32 allow the refrigeration unit 42 to be connected to and disconnected from the load space 40.

In operation, fluid exits compressor 12 in gaseous form and passes via valve 14 to condenser coil 18. Air from outside the vehicle is drawn over the condenser coil 18 by fan 20, which causes the gaseous fluid to condense to a liquid. The fluid then passes through expansion valve 22, after which the fluid loses pressure and evaporates, thereby cooling down. The cooled fluid then passes into the evaporator coil 28. The fan 30 blows air over the evaporator coil 28 and the cooled air thereby produced is directed into the load space. The fluid from the evaporator coil then flows back to the compressor via valve 34, and the cycle is repeated.

While a single evaporator unit 26 is shown in Figure 1, in practice two or more evaporator units may be provided.

The refrigeration system shown in Figure 1 also comprises control unit 44, temperature sensor 46, and input means 48 such as a keypad. The input means 48 allows a user to input desired temperatures to the control unit 44. The temperature sensor 46 senses the temperature of the air in the load space 40 and outputs the sensed value to the control unit 44. The control unit 44 adjusts the operation of the compressor 12, condenser fan 20 and exchange fan 30 in dependence on the difference between the desired temperature and the sensed temperature. The control unit may comprise, for example, a programmable logic controller, or a programmed processor.

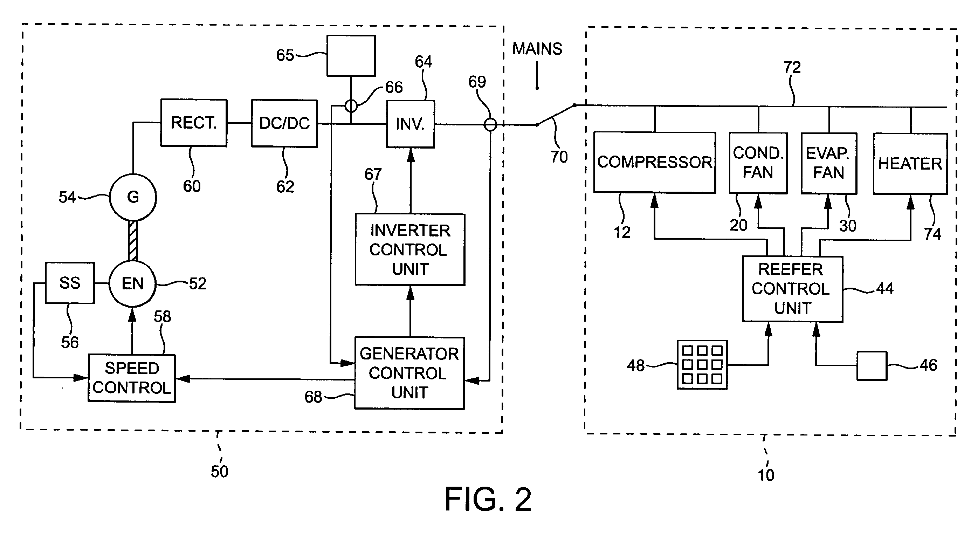

Figure 2 shows parts of a vehicle refrigeration system in accordance with a first embodiment of the invention. Referring to Figure 2, the refrigeration system comprises generator set 50 electrically coupled to refrigeration unit 10 via switch 70. Switch 70 allows refrigeration unit 10 to be powered either from a mains supply or from the generator set 50.

Generator set 50 includes a diesel engine 52 which is mechanically coupled with generator 54 so as to drive the generator, thereby to generate a variable frequency and voltage ac output. The engine has a speed sensor 56 and a speed controller 58 which includes an electronic fuel injection system. The speed sensor 56 produces an output which is indicative of the engine speed, and supplies this signal to speed controller 58. Speed controller 58 controls operation of the fuel injection system so as to control the speed of the engine.

The output of generator 54 is rectified by full wave rectifier bridge 60 so as to produce a dc rectified output. The rectified output is fed to dc/dc converter 62. dc/dc converter 62 regulates the rectified dc output so as to produce an intermediate dc output having a substantially constant voltage. The intermediate dc output is connected to inverter 64, which produces an ac output having a desired frequency and voltage, under control of inverter control unit 67.

Current and voltage sensor 69 monitors the current and voltage of the ac output, and produces measurements of the instantaneous current and voltage. The measured current and voltage values are fed to generator control unit 68. Generator control unit 68 outputs a control signal to speed controller 58 in order to control the speed of the engine 52 in dependence on the current signal from current sensor 66. Generator control unit 68 may comprise, for example, programmable control logic, or a programmed processor.

An energy storage device 65 such as a capacitor or a battery may be connected to the intermediate dc output so as to provide a short term energy reserve when the load applied to the generator varies suddenly. The current and voltage drawn from the energy storage device 65 and be measured by current and voltage sensor 66, and also fed to the generator control unit 68 for use in controlling the speed of the engine 52.

In the generator set 50 of Figure 2, rather than using the ac output of the generator 54 directly, an intermediate dc output is first produced, and a new ac output signal is then synthesised. This can allow the voltage and frequency of the ac output to be maintained substantially constant for a range of different engine speeds. This can allow the engine to be run at much lower speeds than would be the case if the output of the generator were used directly.

The output of the generator set 50 is used to supply a power rail 72 within refrigeration unit 10. Various components within the refrigeration unit 10 are powered from this power rail, including compressor 12, condenser fan 20, evaporator fan 30, and heater 74. Each of compressor 12, condenser fan 20, evaporator fan 30, and heater 74 is controlled by a respective control signal from refrigeration (or reefer) control unit 44. The control signals may operate switches (not shown) which selectively connect the respective components to the power rail 72. Alternatively the control signals may control the level at which the various components operate.

The refrigeration unit 10 operates substantially as described above with respect to Figure 1. In addition, a heater unit 74 is provided. Heater unit 74 comprises a radiator and a radiator fan, and is used to heat the load space where necessary.

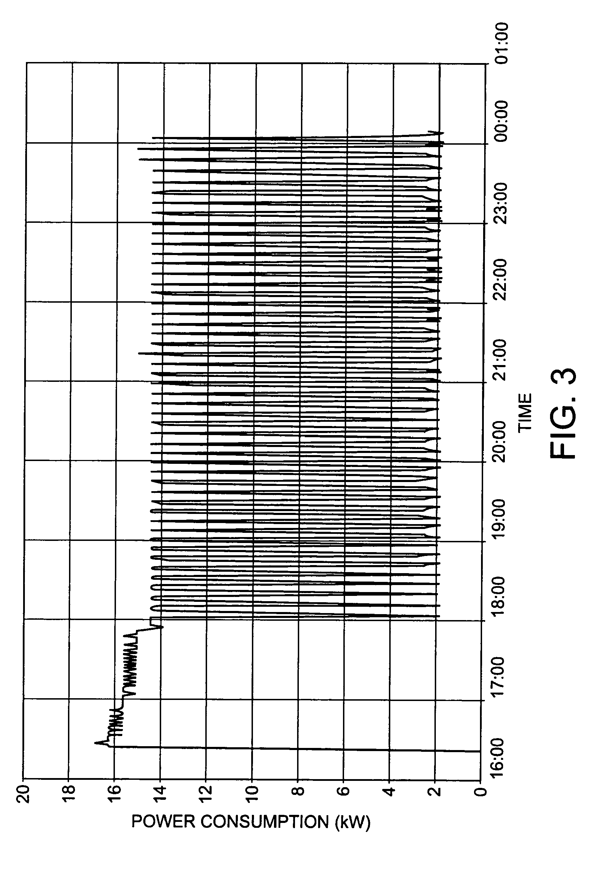

Figure 3 shows a graph of the electrical power consumed by the refrigeration unit 10 over time. From Figure 3 it can be seen that there are essentially two modes of operation. In the first mode the refrigeration unit is cooling down the load space from ambient temperature to the desired storage temperature. In this mode of operation the compressor is switched permanently on, and power consumption is high. In the second mode of operation the refrigeration unit is maintaining the temperature of the load space at the desired temperature. In this mode of operation the compressor is switched on intermittently. As a consequence the power consumed in this mode of operation varies considerably over time as the compressor is switched on and off. In the example shown in Figure 3 the power consumed is around 14 kW when the compressor is switched on and around 2 kW when the compressor is switched off. Thus it can be seen that the compressor is the component which draws by far the largest power.

In the refrigeration system shown in Figure 2, the speed controller 58 is able to vary the speed of the engine 52 in response to a change in state of the compressor 12 in the following way.

When the compressor 52 is switched off, a relatively low power is drawn by the refrigeration unit 10. As a consequence, the current of the ac output will be low, and hence the current measured by current and voltage sensor 69 will be low. When the measured current is low (indicating a low power requirement), the generator control unit 68 causes the engine 52 to run at a low speed. By running the engine at a low speed when the compressor is not switched on, the amount of fuel consumed by the engine can be reduced considerably.

When the compressor 52 is switched on there is an immediate rise in the current drawn by the refrigeration unit 10. This increased current demand is initially met by energy storage device 65 as well as stored energy within the rotating mechanical parts. The current of the ac output will then increase, and hence the current measured by current and voltage sensor 69 will increase. In response to this increase, the generator control unit 68 causes the engine 52 to speed up to meet the increased power demand.

The generator control unit 68 also receives measured values of the current and voltage at the output of the energy storage device 65. The generator control unit 68 also causes the engine 52 to speed up when the current drawn from the energy storage device 68 increases, since this indicates that the generator is not meeting the power demand at the generator's output.

When the compressor 52 is switched off again, the current at the ac output will fall, and the generator control unit 68 will reduce the speed of the engine 52.

Controlling the speed of the engine in dependence on the state of the compressor in the way described above means that the engine can operate much more efficiently than would otherwise be the case, in particular during periods when the compressor is not switched on. Furthermore, the control unit may be arranged to anticipate the compressor turning on, and to increase the speed of the engine in response thereto, in ways which will be described below.

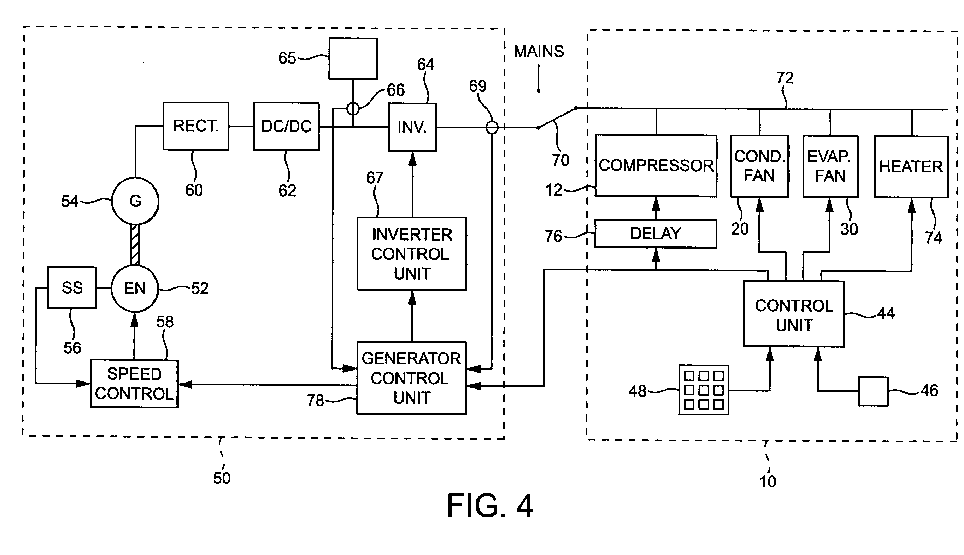

Figure 4 shows parts of a vehicle refrigeration system in a second embodiment of the invention. In Figure 4 parts which are in common with Figure 2 are given the same reference numeral and are not described again.

In the system of Figure 4, the control signal from the refrigeration control unit 44 which is used to turn on the compressor 12 is fed to delay unit 76 and to generator control unit 78. Delay unit 76 applies a delay to the control signal and applies the delayed version of the signal to the compressor 12. In this way a time lag is produced between assertion of the control signal and the compressor switching on or off. Generator control unit 78, however, receives the non-delayed version of the control signal.

When the control signal is asserted, generator control unit 78 acts immediately to speed up the engine 52. In this way the engine speed can be increased to meet the power demand of the compressor before the compressor is switched on. The delay of the delay unit 76 is chosen to be at least the time taken by the engine 52 to speed up to meet the expected demand of the compressor, and may be, for example, one or two seconds.

By arranging the engine 52 to speed up before the compressor 52 is switched on, the amount of energy storage which needs to be provided by energy storage device 65 can be reduced, or the energy storage device may even be dispensed with. This can reduce the cost, weight and complexity of the refrigeration system.

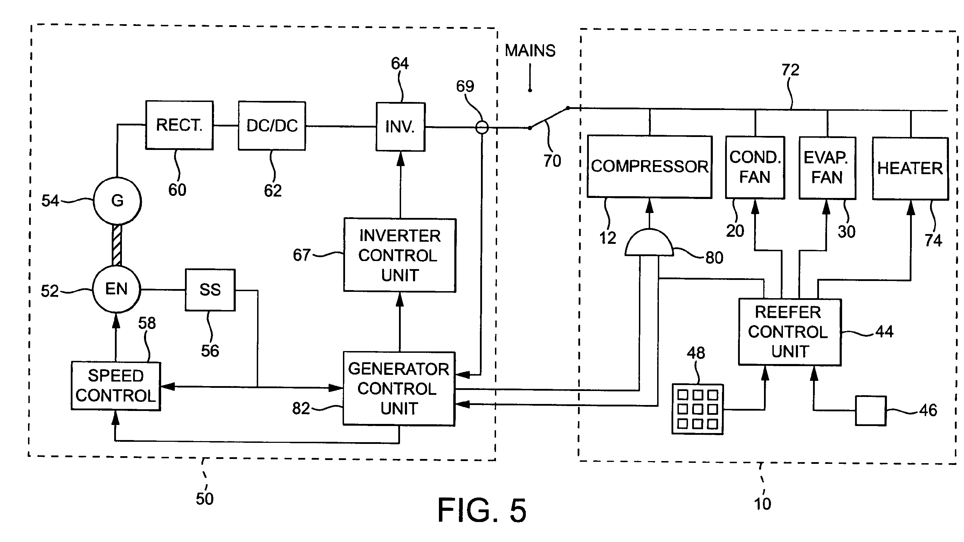

Figure 5 shows parts of a vehicle refrigeration system in a third embodiment of the invention. In Figure 5 parts which are in common with Figures 2 and 3 are given the same reference numeral and are not described again.

In the system of Figure 5 the control signal from the refrigeration control unit 44 which is used to turn on the compressor 12 is fed to one input of AND gate 80. Generator control unit 82 provides a control signal to the other input of AND gate 80. Generator control unit 82 also receives an output from speed sensor 56.

In operation the system of Figure 5 operates in a similar way to that described above with reference to Figure 4. However, generator control unit 82 asserts the control signal to AND gate 80 once the speed of the engine has been increased to meet the expected demand of the compressor. In this way the compressor is only switched on once the engine is at the required speed.

If required, an energy storage device and associated voltage and current sensor could also be provided, in the way shown in Figure 4.

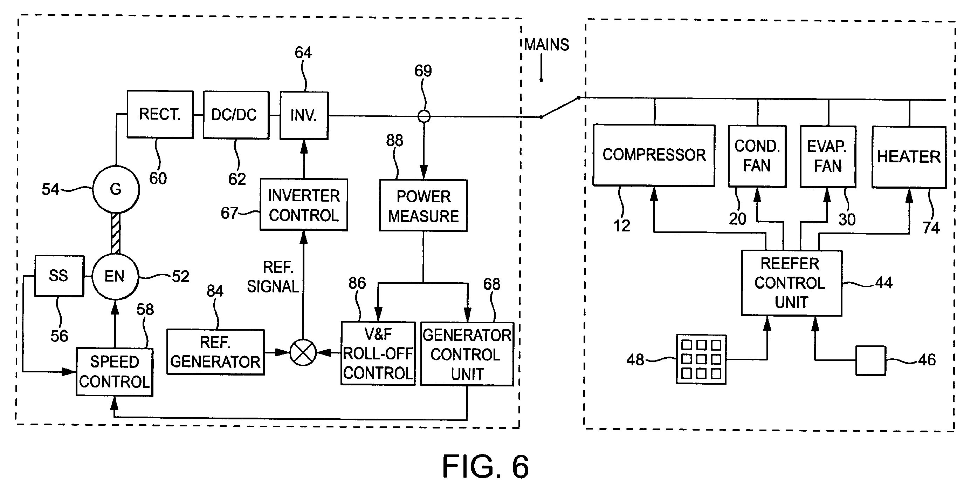

Figure 6 shows parts of a vehicle refrigeration system in a fourth embodiment of the invention. In this embodiment, the output of the generator set is adjusted when the compressor is first switched on so that the power taken by the compressor is increased in a controlled manner (so-called "soft start"). In Figure 6 parts which are in common with previous Figures are given the same reference numeral and are not described again.

In the generator set of Figure 6, inverter 64 is controller by inverter controller 67. The inverter controller 67 takes as an input a reference signal having the voltage and frequency which it is desired to produce at the inverter output. Under normal operating conditions, the reference signal is produced by reference signal generator 88. The inverter controller 67 controls the controls the inverter 64 so as to produce an ac output having substantially the same voltage and frequency as the reference signal.

Also shown in Figure 6 is a voltage and frequency roll-off control unit 86. This unit receives a measured power signal from power measurement unit 88. The measured power signal is a measure of the power drawn at the output of the generator set. Voltage and frequency roll-off control unit 86 produces a signal which is used to modify the signal from reference signal generator 88, in dependence on the measured power signal.

Under normal operating conditions, voltage and frequency roll-off unit 86 does not alter the reference signal generated by reference signal generator 88, so that the generator set has an output which is at substantially the same frequency and voltage as the reference signal generated by reference signal generator 88. However, when voltage and frequency roll-off unit 86 detects a sudden increase in the power drawn from the generator set, indicating that the compressor 12 has been switched on, it acts to reduce the voltage and frequency of the reference signal supplied to the inverter control unit 67. This causes the frequency and voltage of the ac output of the generator set to be reduced.

Since the compressor 12 is powered by the output of the generator set, the effect of reducing the frequency and voltage of the output is to reduce the impact of the power drawn by the compressor. In particular, the compressor will typically comprise a motor driven pump, and reducing the frequency of the ac supply will reduce the motor revolution speed, thereby reducing the starting power of the compressor.

Once the compressor has been switched on, the frequency and voltage are slowly increased to their nominal values over time. This allows a soft start of the compressor, whereby the compressor is turned on slowly over a period of time, rather than being switched on as a step load. This arrangement reduces the stress on the generator set, and reduces the requirements of energy storage devices in the system.

As an example, the voltage and frequency may be reduced by between 10% and 25% of their nominal values, or more, depending on the extent to which the drops can be tolerated by other components in the system. The frequency and voltage may be returned to their nominal values over a period of a few seconds.

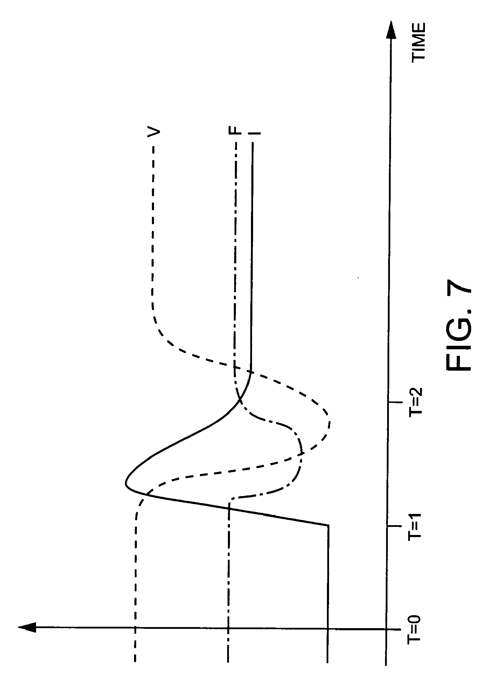

Figure 7 is a graph of how the current I, voltage V and frequency f vary over time in the arrangement of Figure 6. Referring to Figure 7, at time t=0 the compressor is off, the current I drawn from the generator set is at a relatively low level, and the voltage V and frequency f are at their nominal values. At time t=1 the compressor is switched on. The instantaneous power required to turn the compressor on is much larger than the power drawn by the compressor once it is already on. Hence at t=1 there is a sudden increase in the current drawn from the generator set. In response to this sudden increase in power, the frequency and voltage are rolled-off to values lower than their nominal values.

As the compressor turns on, the power drawn by the compressor falls to a steady state value. At time t=2, the current has stabilised at a new value, higher than the original value but lower than the instantaneous value when the compressor was first switched on. Between t=1 and t=2 the voltage and frequency begin to rise, and at t=2 they have returned to their nominal values.

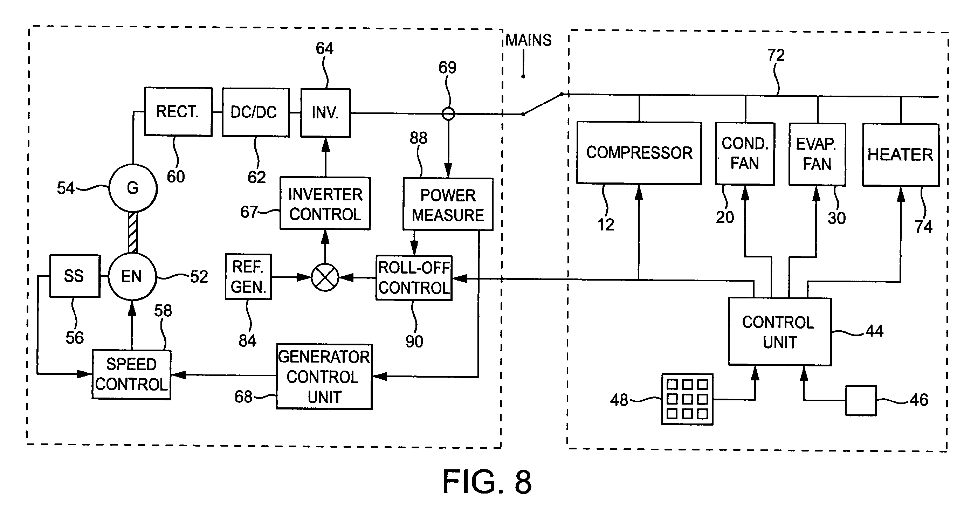

Figure 8 shows parts of a vehicle refrigeration system in a fifth embodiment of the invention. In Figure 8 parts which are in common with previous Figures are given the same reference numeral and are not described again.

The arrangement shown in Figure 8 operates in a similar way to that described above with reference to Figures 6 and 7. However, in Figure 8, frequency and voltage roll-off unit 90 also receives the control signal from the control unit 44 which is used to turn on the compressor 12. When the control signal changes state to turn on the compressor, frequency and voltage roll-off unit 90 acts immediately to reduce the frequency and voltage of the ac output, without waiting for an increase in the measured power of the ac output. This can reduce the sudden surge in current which would otherwise occur when the compressor was first switched on. If desired, a delay could be introduced in the control signal before the compressor in a similar way to that shown in Figure 4. The control signal from the control unit 44 may also be fed to the generator control unit 68, for use in controlling the speed of the engine.

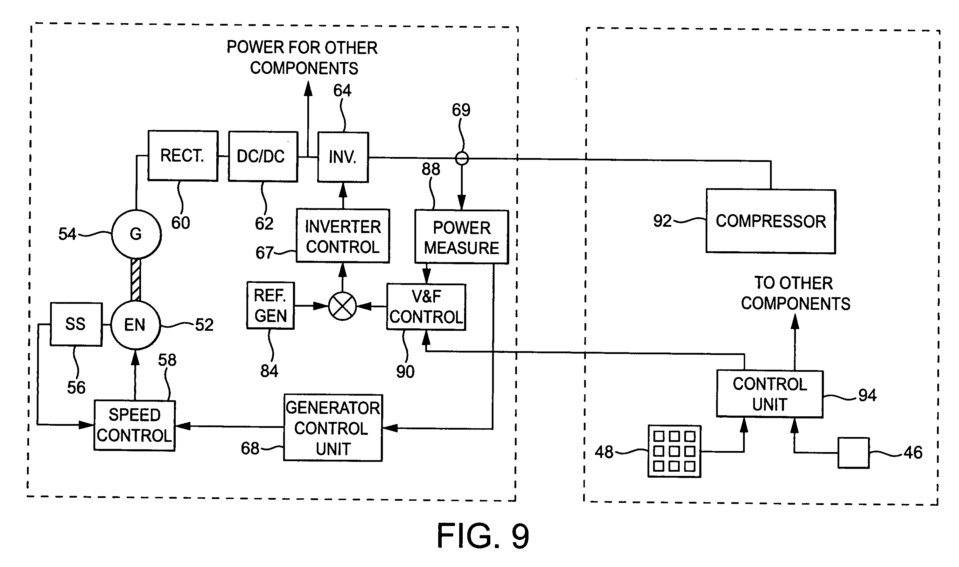

Figure 9 shows parts of a vehicle refrigeration system in a sixth embodiment of the invention. In Figure 9 parts which are in common with previous Figures are given the same reference numeral and are not described again.

In the arrangement shown in Figure 9, the compressor 92 is connected to the output of the inverter 64, and operation of the compressor 92 is controlled by controlling the frequency and voltage of the inverter output. Other components of the refrigeration unit may be powered either from the same power line as the compressor, or from an alternative source. For example, a second inverter may be connected to the intermediate dc output for powering the other components, or a battery may be used to power the other components. If a battery is used, the battery may be charged using the output of the inverter 64 or the intermediate dc output. By way of example, Figure 9 shows the power for the other components being taken from the intermediate dc output.

Control unit 94 produces a signal which is proportional to the difference between the desired temperature of the load space, and the actual temperature as measured by temperature sensor 46, and this signal is fed to frequency and voltage control unit 96. Frequency and voltage control unit 96 adjusts the frequency and voltage of the reference signal generator 84 in dependence on the signal received from the control unit. This causes the output of the inverter 64, and hence the power taken by the compressor 92, to be controlled. The signal may also be fed to generator control unit 68, for use in controlling the engine speed.

In operation, when the refrigeration unit is cooling down the load space from ambient temperature, the difference between the measured temperature and the required temperature will be high. The frequency and voltage at the output of the inverter 64 are then set to their maximum values, so that the compressor 92 operates at maximum power. This allows the load space to be cooled down as quickly as possible. Once the measured temperature is close to the required temperature, the frequency and voltage of the inverter are reduced, and are controlled at a level which maintains the measured temperature at or close to the required temperature. In this mode of operation, rather than turning the compressor on and off, the compressor is operated at a reduced power in order to maintain the temperature of the load space at around the required temperature. This arrangement can reduce the stress on the generator, and allow the generator to be optimised for average load rather than maximum load, which may improve the fuel efficiency.

While preferred features of the invention have been described with reference to specific embodiments, it will be appreciated that various modifications are possible within the scope of the invention. For example, the voltage and/or current of the intermediate dc output may be sensed instead of or in addition to the voltage or current of the ac output, and may be used in the various control techniques described above. Other signals from the refrigeration unit may be fed to the generator control unit for use in controlling the generator set. For example, the output of the temperature sensor, and/or the control signal for the evaporator fan may be fed to the generator control unit instead of or in addition to the control signal for the compressor. Features of one embodiment may be provided in combination with features of any of the other embodiments.

## Claims

1. A transportation refrigeration system comprising an electrically driven refrigeration unit (10) having a mixed electrical load (12, 20, 30, 74) including a motor driven compressor (12), and a generator set (50), the generator set comprising:
a variable speed engine (52);
a generator (54) driven by the engine to produce an ac output for powering the refrigeration unit (10); and
a control unit (68; 78; 82) for varying the speed of the engine in dependence on a change in state of the compressor.

2. A system according to claim 1, wherein the control unit is arranged to increase the speed of the engine when the compressor is switched on, and/or to decrease the speed of the engine when the compressor is switched off.

3. A system according to claim 1 or 2, wherein the control unit is arranged to monitor an output of the generator and to vary the speed of the engine in dependence thereon.

4. A system according to any of the preceding claims, wherein the control unit is arranged to receive a signal from the refrigeration unit and to vary the speed of the engine in dependence thereon.

5. A transportation refrigeration system comprising an electrically driven refrigeration unit (10) having a motor driven compressor (12), and a generator set (50), the generator set comprising:
a variable speed engine (52);
a generator (54) driven by the engine to produce an ac output; and
a control unit (68; 78; 82) for controlling the speed of the engine in dependence on the power requirements of the refrigeration unit,
wherein the control unit is arranged to anticipate a change in state of the compressor, and to change an operating parameter of the generator set before the change in state of the compressor.

6. A system according to claim 5, wherein the control unit is arranged to vary one or more of the speed of the engine, the generator output voltage and the generator output frequency before the change in state of the compressor.

7. A system according to claim 5 or 6, wherein the control unit is arranged to increase the speed of the engine when the compressor is to be switched on.

8. A system according to any of claims 5 to 7, wherein the control unit is arranged to receive a signal from the refrigeration unit and to change an operating parameter of the generator set in dependence thereon.

9. A system according to claim 4 or 8, wherein the signal is a signal which is used by the refrigeration unit to control the compressor.

10. A system according to claim 4, 8 or 9, wherein the signal is a signal which is used by the refrigeration unit to control a fan, such as an evaporator fan, a radiator fan, a condenser fan, or a compressor fan.

11. A system according to any of claims 4 or 8 to 10, wherein the signal is an output of a temperature sensor.

12. A system according to any of claims 4 or 8 to 11, wherein the control unit is arranged to change an operating parameter of the generator set in response to a predetermined sequence of signals.

13. A system according to any of the preceding claims, further comprising delay means for delaying a signal for controlling the compressor, wherein the compressor receives the delayed signal.

14. A system according to any of the preceding claims, wherein the control unit is arranged to control the power drawn by the compressor.

15. A system according to claim 14, wherein the control unit is arranged to control the voltage and/or the frequency of the ac output in order to control the power drawn by the compressor.

16. A system according to claim 14 or 15, wherein the control unit is arranged such that the frequency and/or voltage of the ac output is lower than its steady state value when the compressor is first switched on.

17. A system according to any of claims 14 to 16, wherein the control unit is arranged to control the voltage and/or the frequency of the ac output in dependence on a signal generated by the refrigeration unit indicating a change in state of the compressor.

18. A system according to claim 17, wherein the signal is one or more of a signal which is used by the refrigeration unit to control the compressor, a signal which is used by the refrigeration unit to control a fan, an output of a temperature sensor, or a predetermined sequence of signals.

19. A system according to any of the preceding claims, wherein the control unit is arranged to output a signal to the refrigeration unit for controlling the compressor.

20. A system according to claim 19, wherein the control unit outputs a signal to the refrigeration unit for switching the compressor on once the speed of the engine has reached a predetermined level.

21. A system according to claim 19 or 20, wherein the control unit outputs a signal to the refrigeration unit for controlling the power drawn by the compressor.

22. A system according to any of the preceding claims, wherein control unit is arranged to vary the frequency and/or voltage of the ac output in order to operate the compressor at a level which maintains the temperature of a load space within a desired range.

23. A system according to any of the preceding claims, wherein the refrigeration unit comprises a plurality of compressors, and the control unit is arranged to change an operating parameter of the generator set in dependence on the state of the compressors.

24. A system according to claim 23, wherein the control system is arranged to control the engine such that the engine operates at a higher speed when two or more compressors are switched on than when one compressor is switched on.

25. A system according to any of the preceding claims, wherein the refrigeration unit comprises a plurality of compressors, and the control unit is arranged to control the voltage and/or the frequency of the ac output in dependence on the state of the compressors.

26. A system according to any of the preceding claims, wherein the generator comprises an alternator for producing an ac output, an ac to dc converter for converting the ac output of the alternator to an intermediate dc output, optionally a dc to dc converter for regulating the voltage of the intermediate dc output, and a dc to ac converter for converting the intermediate dc output to an ac output for driving the refrigeration unit.

27. A refrigerated vehicle comprising a refrigeration system according to any of the preceding claims.

28. A method of controlling a transportation refrigeration system, the system comprising an electrically driven refrigeration unit comprising a mixed electrical load including a motor driven compressor, and a generator set comprising a variable speed engine and a generator for providing electrical power for the refrigeration unit, the method comprising varying the speed of the engine in dependence on a change in state of the compressor.

29. A method of controlling a transportation refrigeration system, the system comprising an electrically driven refrigeration unit having a motor driven compressor, and a generator set comprising a variable speed engine, a generator for providing electrical power for the refrigeration unit and a control unit for controlling the speed of the engine in dependence on the power requirements of the refrigeration unit, the method comprising anticipating a change in state of the compressor, and changing an operating parameter of the generator set before the change in state of the compressor.
